# EUROPEAN PATENT SPECIFICATION

(11) **EP 3 338 480 B1**
(45) Date of publication and mention of the grant of the patent: **04.12.2019**
(21) Application number: 15904195.3
(22) Date of filing: 30.10.2015
(51) Int. Cl.: H04M 3/56, H04L 29/06, H04W 28/02

(54) **DEVICE AND METHOD FOR MERGING CIRCUIT SWITCHED CALLS AND PACKET SWITCHED CALLS IN USER EQUIPMENT**
VORRICHTUNG UND VERFAHREN ZUM ZUSAMMENFÜHREN VON LEITUNGSVERMITTELTEN ANRUFEN UND PAKETVERMITTELTEN ANRUFEN IN EINEM BENUTZERGERÄT
DISPOSITIF ET PROCÉDÉ POUR LA FUSION D'APPELS À COMMUTATION DE CIRCUITS ET D'APPELS À COMMUTATION DE PAQUETS DANS UN ÉQUIPEMENT UTILISATEUR

(30) Priority: 18.09.2015 IN 4906CH2014; 28.10.2015 KR 20150150007
(43) Date of publication of application: 27.06.2018
(73) Proprietor: Samsung Electronics Co., Ltd., Suwon-si, Gyeonggi-do 16677 (KR)
(72) Inventor: RATHORE, Chetan Singh, Bangalore 560037 (IN); RAMADOSS, Ramkumar, Bangalore 560037 (IN); DASH, Rilesh Kumar, Bangalore 560037 (IN); BHATIYA, Shital Ranchhoddas, Bangalore 560037 (IN); KUMAR, Dheeraj, Bangalore 560037 (IN)
(74) Representative: Taor, Simon Edward William
(86) International application number: PCT/KR2015/011582
(87) International publication number: WO 2017/047865

(56) References cited:
- WO-A1-2013/122835
- KR-A- 20120 074 042
- KR-A- 20140 127 700
- US-A1- 2007 253 348
- US-A1- 2009 201 835
- US-A1- 2009 201 835
- US-A1- 2015 189 566

## Description

### Technical Field

The present disclosure relates to support merging of circuit switched (CS) and packet switched (PS) calls in a user equipment (UE), in telecommunication network.

### Background Art

To meet the demand for wireless data traffic having increased since deployment of 4G (4^{th}-Generation) communication systems, efforts have been made to develop an improved 5G (5^{th}-Generation) or pre-5G communication system. Therefore, the 5G or pre-5G communication system is also called a 'Beyond 4G Network' or a 'Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged.

As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched.

Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

Meanwhile, Mobile communications has been evolved very popular and an essential part of everyday life. Mobile communication, which was started as a simple point-to-point communication, now offers a one-to-many communication and video communication technologies. The existing mobile communication systems use different communication technologies for transmitting g and receiving data between user equipments (UE). Among such communication technologies, two technologies that are being widely used are a circuit switching (CS)-based communication technology and a packet switching (PS)-based communication technology.

In the CS-based communication technology, two network nodes establish a communication channel. This channel provides a full bandwidth and remains connected throughout the communication session. For example, when a call is made from one point to another, switches within the telephone exchanges create a continuous wire circuit for as long as the call lasts. In the PS-based communication technology, the data being transmitted from one point to another is broken into packets. These packets are transmitted through the network independently, shared by multiple simultaneous communication process.

In the existing telecommunication systems, a user can attend to a voice call over CS network and PS network using voice over Internet protocol (VoIP), independently, at a time. However, in these systems, a conference call i.e. a call in which 2 or more calls are merged; is possible only if all the calls are originated on CS domain or on the PS domain. Disadvantage of the existing communication systems is that they do not permit or support merging of two or more calls on different domains.

US 2007/253348 relates to a system and method of conferencing endpoints.

US 2009/201835 relates to a method for supporting a multi-party call in combinational session.

The above information is presented as background information only to assist with an understanding of the present disclosure. No determination has been made, and no assertion is made, as to whether any of the above might be applicable as prior art with regard to the present disclosure.

An embodiment of the present disclosure provides a method and apparatus for merging calls generated on different domains

Further, an embodiment of the present disclosure provides a method and apparatus for merging calls generated on a CS domain and a PS domain.

Further, an embodiment of the present disclosure provides a method and apparatus for swapping calls generated on a CS domain and a PS domain.

### Disclosure of Invention

### Solution to Problem

Aspects of the present disclosure are to address at least the above-mentioned problems and/or disadvantages and to provide at least the advantages described below.

According to an aspect of the present disclosure, there is provided a method for handling calls as set out in claim 1. According to another aspect of the present disclosure, there is provided a first user equipment as set out in claim 6.

According to yet another aspect of the present disclosure there is provided a computer readable medium comprising instructions , as set out in claim 11.

Further embodiments are set out in the dependent claims.

Other aspects, advantages, and salient features of the disclosure will become apparent to those skilled in the art from the following detailed description, which, taken in conjunction with the annexed drawings, discloses various embodiments of the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained with, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### Brief Description of Drawings

The above and other aspects, features, and advantages of certain embodiments of the present disclosure will be more apparent from the following description taken in conjunction with the accompanying drawings, in which:
FIG. 1 is a block diagram illustrating an example of a communication network according to an embodiment of the present disclosure;
FIG. 2 is a block diagram illustrating an internal configuration of a user equipment (UE) in a communication network according to an embodiment of the present disclosure;
FIG. 3 is a flow diagram illustrating an example of selecting an operation to be triggered by a UE on the basis of first and second calls in a communication network according to an embodiment of the present disclosure;
FIG. 4 is a flow diagram illustrating an example of an operation of merging at least two calls by the UE in the communication network, according to an embodiment of the present disclosure;
FIGS. 5a, 5b, 5c, and 5d are views in which an operation of merging calls generated by different domains by a UE in a communication system, wherein calls originated from same or different domains are merged by the UE in the communication system according to an embodiment of the present disclosure is implemented by exemplary scenarios; and
FIG. 6 is a view in which an operation of swapping calls generated by different domains by a UE in a UE in a communication system according to variou an embodiment of the present disclosure is implemented by exemplary scenarios; and
FIG. 7 illustrates a User Interface (UI) implementing a user event for merging/ swapping calls generated by different domains by a UE in a communication system according to an embodiment of the present disclosure.

Throughout the drawings, like reference numerals will be understood to refer to like parts, components, and structures.

### Best Mode for Carrying out the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

While expressions including ordinal numbers, such as "first" and "second", as used in various embodiments of the present disclosure may modify various constituent elements, such constituent elements are not limited by the above expressions. The expressions may be used to distinguish an element from another element. For example, a first element may be termed a second element, and likewise a second element may also be termed a first element without departing from the scope of various embodiments of the present disclosure. The term "and/or" includes a combination of a plurality of related disclosed items or one of the plurality of related disclosed items.

The terms as used in various embodiments of the present disclosure are merely for the purpose of describing particular embodiments and are not intended to limit the various embodiments of the present disclosure. As used herein, the singular forms are intended to include the plural forms as well, unless the context clearly indicates otherwise. Further, as used in various embodiments of the present disclosure, the terms "include", "have", and their conjugates may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Unless defined otherwise, all terms used herein, including technical terms and scientific terms, have the same meaning as commonly understood by a person of ordinary skill in the art to which various embodiments of the present disclosure pertain. Such terms as those defined in a generally used dictionary are to be interpreted to have the meanings equal to the contextual meanings in the relevant field of art, and are not to be interpreted to have ideal or excessively formal meanings unless clearly defined in various embodiments of the present disclosure.

According to various embodiments of the present disclosure, an electronic device may include a communication function. For example, the electronic device may include at least one of a smart phone, a tablet personal computer (PC), a mobile phone, a video phone, an e-book reader, a desktop PC, a laptop PC, a netbook computer, a personal digital assistant (PDA), a portable multimedia player (PMP), a MP3 player, a mobile medical appliance, a camera, a wearable device (e.g., head-mounted-device (HMD) such as electronic eyeglasses, electronic clothes, an electronic bracelet, an electronic necklace, an electronic appcessory, an electronic tattoo, or a smart watch).

According to various embodiments of the present disclosure, the electronic device may be a smart home appliance having a function serviced by light that emits various colors depending on the states of the electronic device or a function of sensing a gesture or bio-signal. The smart home appliance may, for example, include at least one of a television, a digital video disk (DVD) player, an audio player, a refrigerator, an air conditioner, a cleaner, an oven, a microwave, a washing machine, an air purifier, a set-top box, a TV box (e.g., HomeSync™ of Samsung, Apple TV™, or Google TV™), a game console, an electronic dictionary, an electronic key, a camcorder, and an electronic frame.

According to some embodiments, the electronic device may include at least one of various medical appliances (e.g., magnetic resonance angiography (MRA), magnetic resonance imaging (MRI), computed tomography (CT), and ultrasonic equipment), navigation equipment, a global positioning system (GPS) receiver, an event data recorder (EDR), a flight data recorder (FDR), automotive infotainment device, electronic equipment for ships (e.g., ship navigation equipment and a gyrocompass), avionics, security equipment, a vehicle head unit, an industrial or home robot, etc.

According to various embodiments of the present disclosure, an electronic device may be a furniture, a part of a building/structure, an electronic board, an electronic signature reception device, a projector, various measurement devices (for example, devices for measuring water, electricity, gas, or an electromagnetic wave), etc.

According to various embodiments of the present disclosure, an electronic device may be a combination of devices described above. Further, it would be obvious to those skilled in the art that an electronic device according to exemplary embodiments of the present disclosure is not limited to the device described above.

Meanwhile, a method and apparatus proposed in an embodiment of the present disclosure can be applied to various communication systems such as an IEEE 802.11 communication system, an IEEE 802.16 communication system, mobile broadcasting services such as a Digital Multimedia Broadcasting (DMB) service, a portable Digital Video Broadcasting-Handheld (DVP-H), and a mobile/portable Advanced Television Systems Committee-Mobile/Handheld (ATSC-M/H) service, etc., a digital video broadcasting system such as an Internal Protocol TeleVision (IPTV) service, a Moving Picture Experts Group (MPEG) Media Transport (MMT) system, an Evolved Packet System (EPS), an LTE communication system, an LTE-Advanced (LTE-A) communication system, a High Speed Downlink Packet Access (HSDPA) mobile communication system, a High Rate Packet Data (HRPD) mobile communication system of the 3^{rd} Generation Project Partnership 2, a Wideband Code Division Multiple Access (WCDMA) mobile communication system of 3GPP2, a Code Division Multiple Access (CDMA) mobile communication system of 3GPP2, a mobile Internet Protocol (Mobile IP) system, etc.

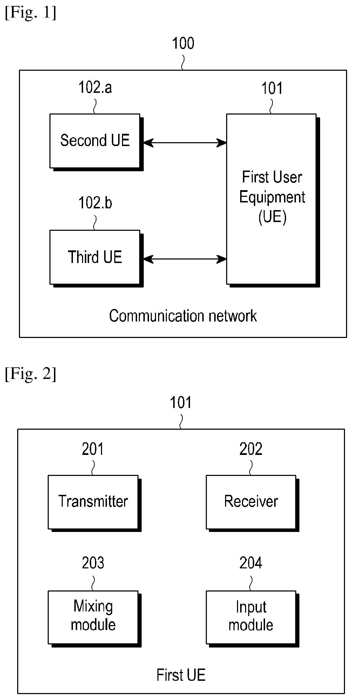

The various embodiments of the present disclosure herein disclose a mechanism for merging or swapping calls originated from same or different domains. Referring now to the drawings, and more particularly to FIGS. 1 through 6, where similar reference characters denote corresponding features consistently throughout the figures, there are shown embodiments.

FIG. 1 is a block diagram illustrating an example of a communication network according to an embodiment of the present disclosure.

Referring to FIG. 1, the communication network 100 comprises of a user equipment (UE) 101, a second UE 102.a, and a third UE 102.b. It is to be noted that though the communication network 100 depicted in FIG. 1 illustrates only one UE and two communication devices, the number of UEs and communication devices can vary according to implementation standards, requirements, and/or one or more other related factors. Further, the UE 101 and the communication devices 102.a and 102.b can be any device that can be configured to establish communication with at least two other devices in the communication network 100, through a suitable communication channel. For example, the UE 101 and the communication devices 102.a and 102.b can be a mobile phone with a voice and/or voice over Internet protocol (VOIP) call support. The UE 101 can be further configured to handle communication/calls received from different domains. Here, the term "domains" may refer to circuit switched (CS) networks, packet switched (PS) networks or any such domain. It is to be noted that for the ease of understanding, the working of the communication network 100 is explained in terms of CS and PS domains, throughout the specification. However, this is not intended to limit the functionality of the communication network 100 to the aforementioned domains.

The UE 101 can be configured to establish a first call with a second UE 102.a in the communication network, wherein the first call is originated from a CS or PS domain. The UE 101 can be further configured to establish a second call request with a third UE 102.b, when the first call is in progress; wherein the second call is initiated by the UE 101 or by the third UE 102.b. The UE 101 can be further configured to provide an option for the user to trigger at least one action, based on the first call and the second call. In various embodiments of the present disclosure, the actions supported by the UE 101 are merging of the first call and the second call, hold one call till the other call is finished/terminated/put on hold, or ending one call while only the other call is being selected to be handled by the UE 101. According to an embodiment of the present disclosure, the UE 101 can act as the communication device 102 and establish communication with another UE 101.

In an embodiment of the present disclosure, the first UE 101 in the communication network 100 is a dual subscriber identification module (SIM) dual active (DSDA) type UE. In this scenario, the first UE 101 can be configured to receive/make a CS call on a second SIM while another CS call on first SIM is ongoing, by placing the ongoing CS call on the first SIM on hold. In another scenario, the first UE 101 can be configured to receive/make a CS call on first SIM when another CS call on second SIM is ongoing, by placing the CS call on the second SIM on hold.

Similarly, if the first UE 101 of a different type, the first UE 101 can be configured to receive/make a voice over long term evolution (LTE) (VoLTE) call when a CS call is ongoing, by placing the ongoing CS call on hold. The first UE 101 can be further configured to receive/make a VoLTE call while a VoLTE call is ongoing, by placing the ongoing VoLTE call on hold.

FIG. 2 is a block diagram illustrating an internal component of a UE in a communication network, according to an embodiment of the present disclosure.

The UE 101 comprises of a transmitter 201, a receiver 202, a mixing module 203, and an input module 204.

Referring to FIG. 2, the transmitter 201 can be configured to transmit voice or text or data packet to at least one communication device 102.a or 102.b that has established communication with the UE 101, based on the type of communication that exists between the UE 101 and the communication device 102.a or 102.b. For example, if the UE 101 has established a voice call with the communication device 102.a or 102.b, then the transmitter 201 in the UE 101 would be transmitting voice data to the communication device 102.a or 102.b, using a circuit switching framework. In another example, if the UE 101 has established an internet protocol (IP) call with the communication device 102.a or 102.b, then the transmitter 201 in the UE 101 would be transmitting data to the communication device 102.a or 102.b, using a PS framework.

The receiver 202 can be configured to receive data in a suitable format from at least one communication device 102.a or 102.b, and output the received data using a speaker associated with the UE 101, to the user. In an embodiment of the present disclosure, if two or more calls are merged to form a conference call, the receiver outputs data received from all communication devices 102.a and 102.b that are part of the conference call.

The mixing module 203 can be configured to collect at least one input pertaining to at least one action to be triggered, with respect to the first call and a second call the UE 101 has established with the second UE 102.a and the third UE 102.b, respectively. In various embodiments of the present disclosure, the action is merging or swapping of the first and second calls. The mixing module 203 can be further configured to collect data that needs to be transmitted to at least one communication device 102.a or 102.b that has established communication with the UE 101, and provide the collected data to the transmitter 201.

In an embodiment of the present disclosure, consider that the UE 101 is communicating with only one communication device 102.a or 102.b. In this case, the mixing module 203 can collect the data to be transmitted to the communication device 102.a or 102.b, from at least one input module 204 (for example a microphone) of the UE 101, and provide the collected data to the transmitter 201, which in turn is transmitted to the communication device 102.a or 102.b, by the transmitter 201. In an embodiment of the present disclosure, consider that the UE 101 is in conference call with a second UE 102.a and a third UE 102.b (i.e. the first and second calls have been merged). In this scenario, the mixing module 203 initially collects data from A and B. In an embodiment of the present disclosure, the terms 'data' herein refers to voice data. Further, the mixing module 203 generates different streams of outputs, and the appropriate stream is transmitted to corresponding communication device 102.a or 102.b, through the transmitter 201. In an example implementation scenario, voice engines of application side (i.e. the voice engine that handles CS voice calls) and modem side (i.e. the voice engine that handles an IP call) can constitute the mixing module 203; such that the data collected by the voice engines are exchanged each other, which enables mixing of the data.

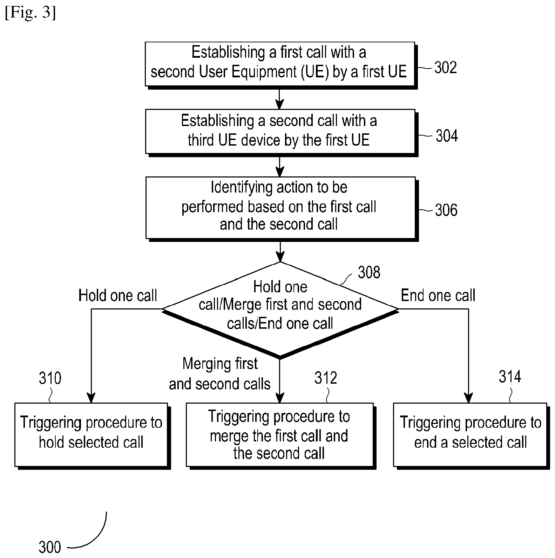

FIG. 3 is a flow diagram that depicts operations involved in the process of selecting an action to be triggered based on the first and second calls by a UE in a communication network, according to an embodiment of the present disclosure.

In an embodiment of the present disclosure, an operation of selecting an operation to be triggered by a UE is called an in-call action, wherein the in-call action is triggered by the UE 101 when at least one call is in progress with at least one communication device 102.a and 102.b..

Referring to FIG. 3, he UE 101 establishes in operation 302 a first call with a second UE 102.a, wherein the first call is in a first domain. The first call may be triggered by the UE 101 or by the second UE 102.a. In operation 304 while the first call is in progress, the UE 101 establishes a second call with a third UE 102.b. In an embodiment of the present disclosure, the second call is initiated by the UE 101, while the first call is in progress. In an embodiment of the present disclosure, the second call is initiated by the third UE 102.b, by sending a call request to the UE 101 while the first call between the UE 101 and the second UE 102.a is in progress. In an embodiment of the present disclosure, the first and second calls are in the same domain.

In operation 306, the UE 101, while or after establishing the second call (while the first call is still in progress), identifies an action to be performed in terms of the first call and the second call. In an embodiment of the present disclosure, the UE 101 automatically identifies the action to be performed, based on at least one criteria preconfigured by the user. In an embodiment of the present disclosure, the UE 101 allows the user to select the action to be triggered, by providing at least one suitable option using a suitable user interface of the UE 101.

In various embodiments of the present disclosure, in operation 308 a user determines the actions that can be performed are holding one call, merging the first and second calls, or ending one call. Based on the selection made, of the available options, the UE triggers corresponding procedures.

In operation 310 if the selected action is holding one call, then the corresponding procedure is triggered by the UE 101. A procedure corresponding to operation 310 include a first step of accepting a CS call and establishing and connecting the CS call by the UE 101 when the selected action is an action of holding a VoIP-PS call. Further, in this case, the procedure includes a second step of holding signaling relating to the CS call and retrieving the VoIP-PS call, and holding the CS call when being connected to the VoIP-PS call, by the UE 101. The first step and the second step repeatedly operate on the basis of a call which is in active state.

If the selected action is merging of the first call and the second call, then the corresponding procedure is triggered by the UE 101 in operation 312. A procedure corresponding to operation 312 includes a step of holding a VoIP-PS call, accepting a CS call, and establishing the CS call by the UE 101 when the VoIP-PS call and the CS call are merged. Further, the UE 101 retrieves a VoIP-PS call and starts to process a reception stream (or packet) when a signal relating to the CS call and the VoIP-PS call is in an active state. The process of the reception stream (or packet) includes:, for example, extracting a wideband sample when a PS speech packet is received; down-sampling the extracted wideband sample; and generating a specific stream for a CS call by mearing the down-sampled wideband sample (16khz) with a narrowband local voice data (8khz). As another example, the process of the reception stream (or packet) includes: extracting a narrowband sample (8khz) when a CS speech packet is received; up-sampling the extracted narrowband sample; and generating a specific stream for a PS call by merging the up-sampled narrowband sample with the up-sampled local voice data (16khz).

If the selected action is ending one call, then the corresponding procedure is triggered by the UE 101 in operation 314. A procedure corresponding to operation 314 include a step of establishing a CS call and terminating the CS call when the CS call is connected, by the UE 101, when the selected action terminates a VoIP-PS call. The various actions in method 300 may be performed in the order presented, in a different order or simultaneously. Further, in various embodiments of the present disclosure, some actions listed in FIG. 3 may be omitted.

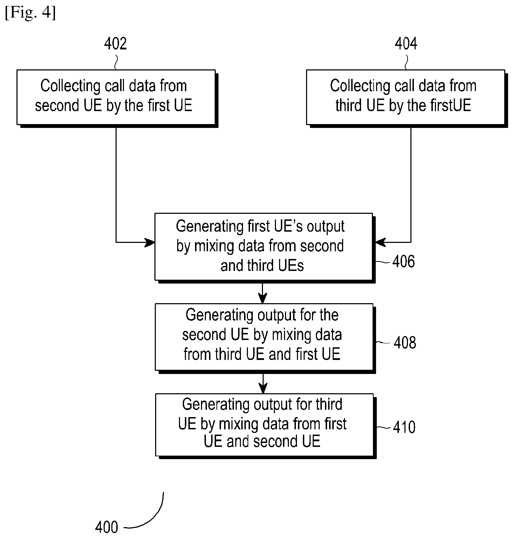

FIG. 4 is a flow diagram illustrating an operation merging at least two calls by the UE in the communication network according to an embodiment of the present disclosure. The merging of the calls is explained by considering a scenario in which the UE 101 has established communication with at least two communication devices, e.g., the second UE 102.a and the third UE 102.b, and that the UE 101 has merged the first call and the second call to generate a conference call.

Referring to FIG. 4, when the conference call is in progress, the UE 101 collects data (i.e. voice data) from the transmitters of the second UE 102a and the third UE 102.b, in no particular order, in operations 402 and 404. The first call and the second call can be in the same or different domains. For example, the first call can be in CS domain and the second call can be in PS domain, or vice-versa. In other examples, the first and second calls can either be in the CS domain, or in the PS domain. The UE 101 can merge the calls, regardless the domain that the calls are generated from. In an embodiment of the present disclosure, in operation 406 the receiver 202 of the UE 101 combines the data received from the second UE 102.a and the third UE 102.b, and generates an output of the UE 101, which can be provided to the user, using a suitable output module (for example, speaker of the UE 101). The output generated by the receiver 202 is then provided to the mixing module 203.

The mixing module 203 collects input from an input module 204 (for example microphone of the UE 101). The mixing module 203 also collects the output for the UE 101, generated by the receiver 202, wherein the output for the UE comprises of data collected from the second UE 102.a and the third UE 102.b. Based on the collected data, the mixing module generates different streams of outputs for the second UE 102.a and the third UE 102.b. In order to do this, the mixing module 203 initially separates data from the second UE 102.a and the third UE 102.b, by processing the data collected from the receiver 202.

In operation 408 while generating the output for the second UE 102.a, the mixing module 203 combines the data received from the third UE 102.b and the voice input from user of the UE 101. The generated output is then transmitted to the receiver of the second UE 102.a, through a suitable channel.

Similarly in operation 410, while generating the output for the third UE 102.b, the mixing module 203 combines the data received from the second UE 102.a and the voice input from user of the UE 101. The generated output is then transmitted to the receiver of the third UE 102.b, through a suitable channel.

The various actions in method 400 may be performed in the order presented, in a different order or simultaneously. Further, in various embodiments of the present disclosure, some actions listed in FIG. 4 may be omitted.

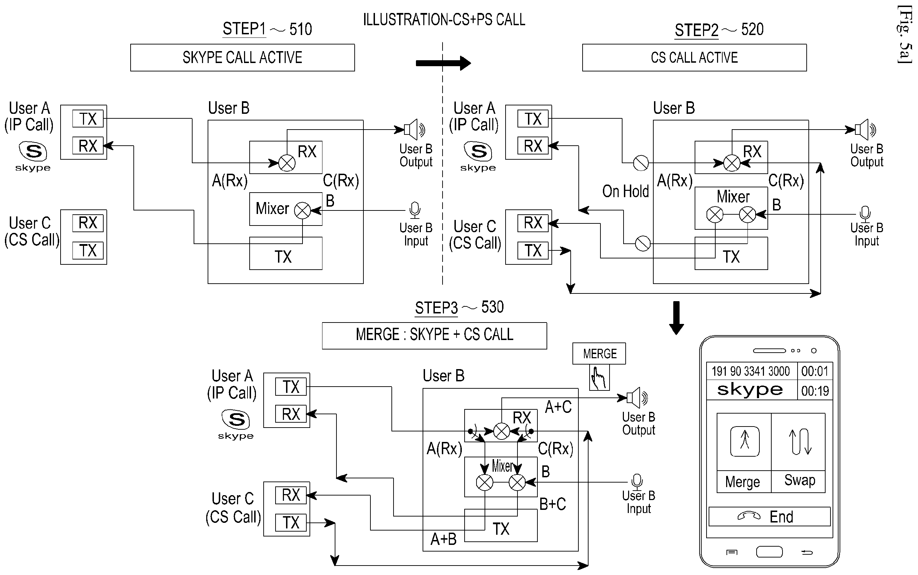

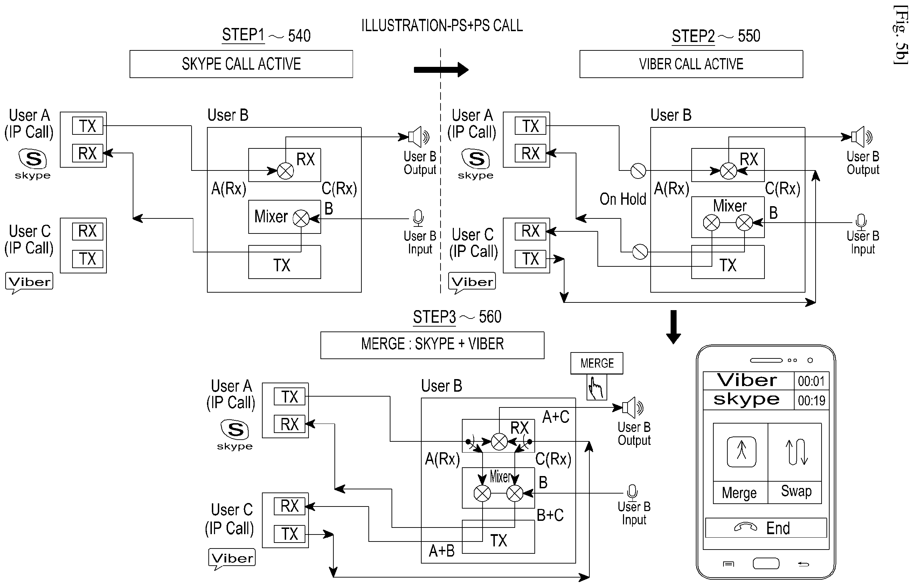

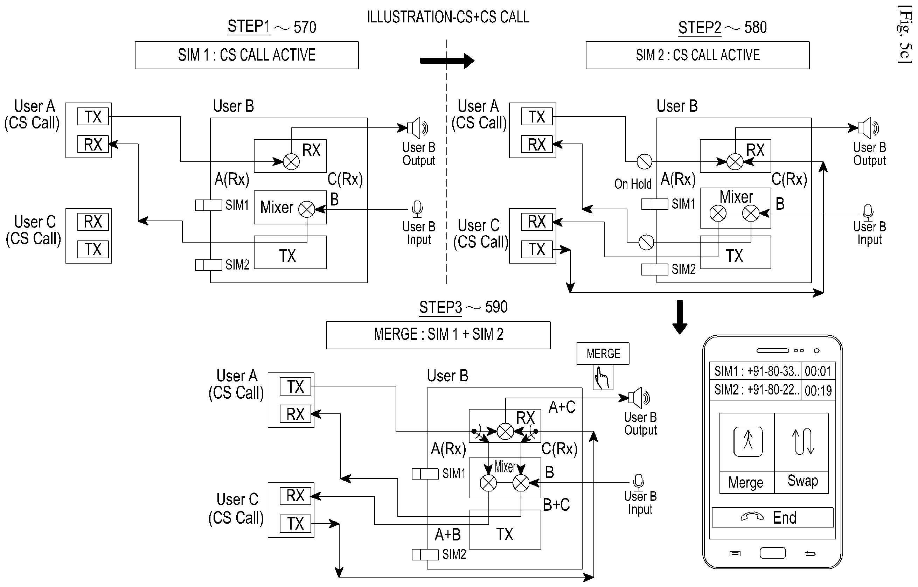

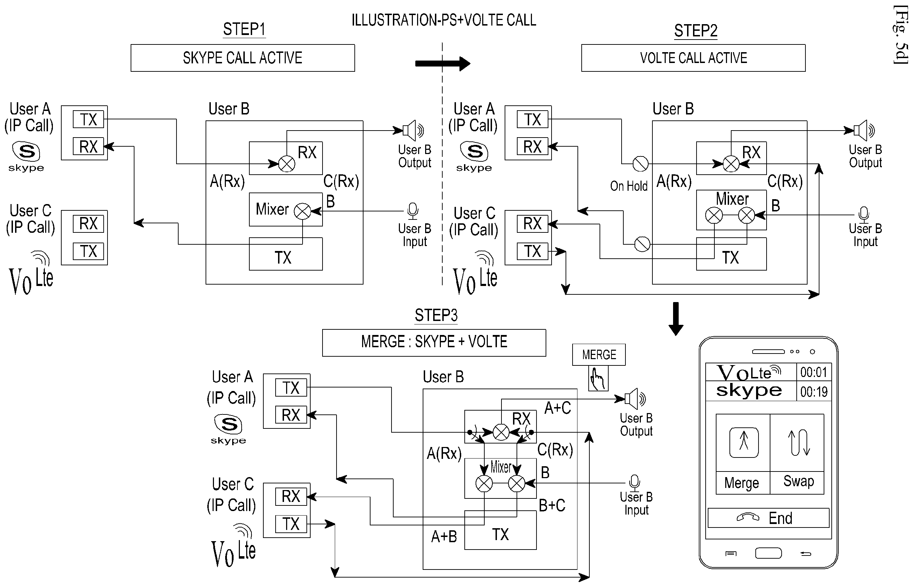

FIGS. 5a, 5b, 5c, and 5d are views in which an operation of merging calls generated by different domains by a UE in a communication system according to an embodiment of the present disclosure is implemented by exemplary scenarios. It is to be noted that the user interface (UI) as depicted in these figures are for example purpose only, and can vary.

### Scenario 1: Illustration of merging of a CS call and a PS call

In this scenario, referring to FIG. 5a, in STEP 1 510, assume that the second UE 102.a (referred to as 'user A') has established a PS call (Skype call for example) with the UE 101 (referred to as 'user B'). The receiver RX of the user B receives data transmitted by the transmitter TX of the user A. The mixing module Mixer of the user B collects inputs from the microphone, and transmits to the user A, using the transmitter.

In STEP 2 520 upon receiving a second call (a CS call) from the third UE 102.b (referred to as 'user C'), the user B switches the first call on a hold-on state. In this case, the communication channels with the user A are temporarily blocked by user B, while the transmitter, receiver, and the mixing module of the user B processes the data with the user C.

In STEP 3 530, once the merge option is selected, either automatically or based on manual real-time inputs collected from the user, the user B merges the first call and the second call, to generate the conference call. In this process, the receiver of the user B collects data from both user A and user C, combines the collected data, and provides as output of the user B to the user.

Further, the mixing module of the user B collects the combined output generated by the receiver. The mixing module also collects the inputs provided by the user B. At this stage, the mixing module has data from the user A, and user B, and user C. Using this data, the mixing module generates different streams of output, for user A and user B. The mixing module generates output for the user A by combining data from user B and user C. The mixing module generates output for user C by combining data from the user A and the user B. The generated outputs are then transmitted to respective communication devices, through respective channels.

### Scenario 2: Illustration of merging of a PS call and a PS call

In this scenario, referring to FIG. 5b, in STEP 1 540, assume that user A has established a PS call (Skype call for example) with user B. The receiver of the user B receives data transmitted by the transmitter of user A. The mixing module of the user B collects inputs from the microphone, and transmits to the user A, using the transmitter.

In STEP 2 550 upon receiving a second call (a PS call-Viber) from user C, the user B switches the first call on a hold-on state. In this case, the communication channels with the user A are temporarily blocked by the user B and the transmitter, the receiver, and the mixing module of the user B processes the data from and to the user C.

In STEP 3 560, once the merge option is selected either automatically or based on manual real-time inputs collected from a user, the user B merges the first call and the second call, to generate the conference call. In this process, the receiver of the user B collects data from both user A and user C, combines the collected data, and provides the combined data as output of the user B to the user.

Further, the mixing module of the user B collects the combined output generated by the receiver. The mixing module also collects the inputs provided by a user of the user B. At this stage, the mixing module has data from the user A, the user B, and the user C. Using this data, the mixing module generates outputs having different streams for the user A and the user C. The mixing module generates output for user A by combining data from user B and the user C. The mixing module generates output for user C by combining data from user A and the user B. The generated outputs are then transmitted to respective communication devices, through respective channels.

### Scenario 3: Illustration of merging of a CS call and a CS call

In this scenario, referring to FIG. 5c, in STEP 1 570, assume that the user A has established a CS call with the user B. The receiver of the user B receives data transmitted by the transmitter of user A. The mixing module of the user B collects inputs from the microphone, and transmits to the user A, using the transmitter.

In STEP 2 580, upon receiving a second call (another CS call) from the user C, the user B switches the first call to a hold-on state. In this case, the communication channels to and from the user A are temporarily blocked by the user B and the transmitter, receiver, and the mixing module of the user B processes the data from and to the user C.

In STEP 3, once the merge option is selected either automatically or based on manual real-time inputs collected from the user, the user B merges the first call and the second call to generate the conference call. In this process, the receiver of the user B collects data from both user A and user C, combines the collected data, and provides the combined data as output of the user B to the user.

Further, the mixing module of the user B collects the combined output generated by the receiver. The mixing module also collects the inputs provided by the user B. At this stage, the mixing module 203 has data from the user A, the user B, and the user C. Using this data, the mixing module generates different streams of output, for user A and user C. The mixing module generates output for user A by combining data from user B and user C. The mixing module generates output for user C by combining data from user A and the user B. Thereafter, the generated outputs are then transmitted to respective communication devices, through respective channels.

### Scenario 4: Illustration of merging a PS call and a VOLTE call

In a scenario illustrated in FIG. 5d, it is assumed that the user A has established a PS call (Skype call for example) with the user B. The receiver of the user B receives data transmitted by the transmitter of the user A. The mixing module of the user B collects inputs from a microphone, and transmits the collected inputs to the user A by using the transmitter.

When receiving a second call (a VOLTE call) from the user C, the user B switches the first call to a hold-on state. In this case, the communication channels to and from the user A are temporarily blocked by the user B and the transmitter, the receiver, and the mixing module of the user B processes the data from and to the User C.

Once the merge option is selected either automatically or based on manual real-time inputs collected from a user, the user B merges the first call and the second call to generate the conference call. In this process, the receiver of the user B collects data from both the user A and the user C, combines the collected data, and provides the combined data as output of the user B to a user.

Further, the mixing module of the user B collects the combined output generated by the receiver. The mixing module also collects the inputs provided by the user B. At this stage, the mixing module has data from the user A, the user B, and the user C. Using this data, the mixing module generates different streams of output, for the user A and the user C. The mixing module generates output for the user A by combining data from the user B and the user C. The mixing module generates output for the user C by combining data from the user A and the user B. Thereafter, the generated outputs are transmitted to respective communication devices through respective channels.

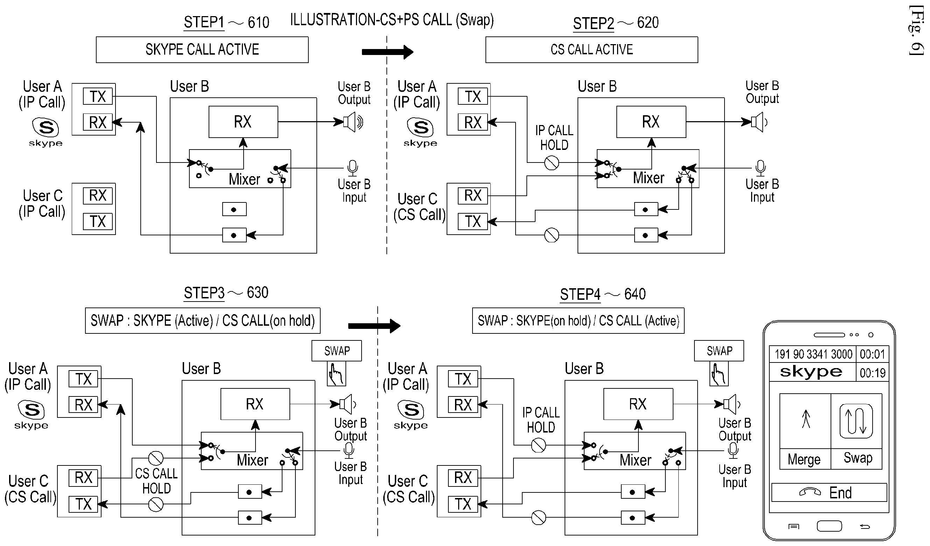

FIG. 6 is a view in which an operation of swapping calls generated by different domains by a UE in a communication system according to an embodiment of the present disclosure is implemented by exemplary scenarios.

In this scenario, referring to FIG. 6, in STEP 1 610 assume that the user A has established a PS call (Skype call for example) with the user B. The receiver of the user B receives data transmitted by the transmitter of user A. The mixing module of the user B collects inputs from a microphone, and transmits the collected inputs to the user A using the transmitter.

In STEP 2 620, upon receiving a second call (a CS call) from the user C, the user B switches the first call to a hold-on state. In this case, the communication channels with the user A are temporarily blocked by the user B and the transmitter, the receiver, and the mixing module of the user B processes the data from and to the user C.

In STEP 3 630, when the call swap option is selected by the User B, the mixing module of the user B receives data relating to the first and second calls. When the user B swaps the second call for the first callsecond in STEP 4 640, the mixing module blocks data to and from user C, and processes data pertaining to the second call to and from user A.

In STEP 4, when the user B swaps the first call for the second call, the mixing module blocks data to and from user A, and processes data pertaining to the second call to and from user C.

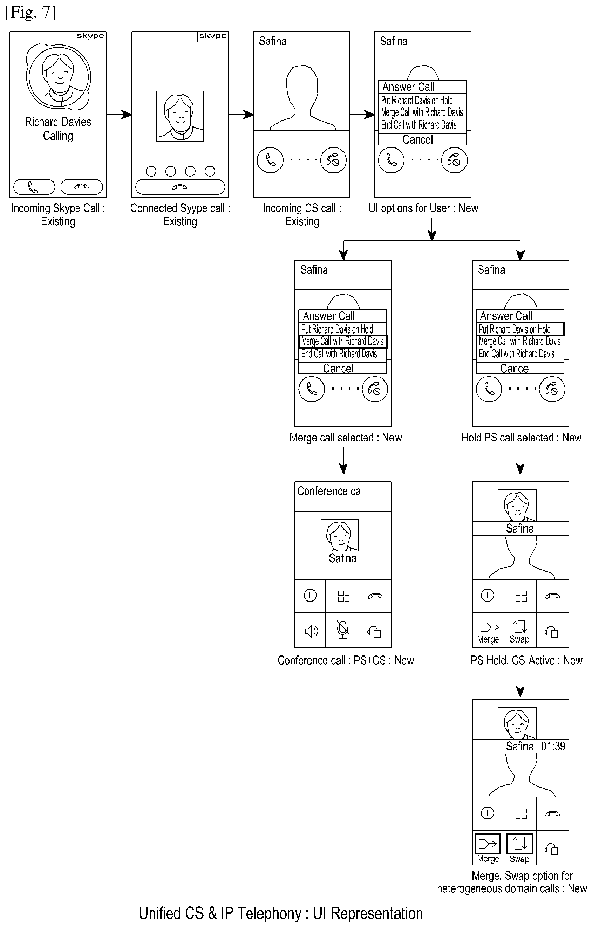

FIG. 7 illustrates a User Interface (UI) implementing a user event for merging/ swapping calls generated by different domains by a UE in a communication system according to an embodiment of the present disclosure.

A UE connects the received PS call when receiving a PS call (e.g., a Skype call), and displays an answer call screen when receiving another call, e.g., a CS call, while the PS call is in an active state. The answer call screen may include a plurality of options, for example, an option "Put Richard Davis on Hold", an option "Merge Call with Richard Davis", and an option "End Call with Richard Davis".

In this case, when the UE selects the option "Merge Call with Richard Davis", the existing PS call and a new CS call are merged with each other, and a screen for each call is displayed on one screen while being divided horizontally. Of course, the screen for each merged call may be displayed horizontally, vertically, or in other schemes.

Further, in this case, when the UE selects the option "Put Richard Davis on Hold", some of previously-arranged function buttons are displayed while being substituted for a button relating to a user event. As an example, a speaker button and a mute button from among the previously-arranged function buttons are displayed while being substituted for a merging button and a swapping button, respectively. Thereafter, a user selects the merging button or the swapping button to perform the following operation. At this time, when it is assumed that the user selects the swapping button, the existing PS call is switched to a hold-on state and a new CS call is switched to an active state.

The various embodiments of the present disclosure disclosed herein can be implemented through at least one software program running on at least one hardware device and performing network management functions to control the network elements. The network elements shown in FIG. 1 include blocks which can be at least one of a hardware device, or a combination of hardware device and software module.

The various embodiments of the present disclosure disclosed herein specify a mechanism for triggering selective action for calls from different domains. The mechanism allows merging and swapping of calls from different domains, providing a system thereof. Therefore, it is understood that the scope of protection is extended to such a system and by extension, to a computer readable means having a message therein, said computer readable means containing a program code for implementation of one or more operations of the method, when the program runs on a server or mobile device or any suitable programmable device. The method is implemented in a preferred embodiment using the system together with a software program written in, for ex. very high speed integrated circuit hardware description language (VHDL), another programming language, or implemented by one or more VHDL or several software modules being performed on at least one hardware device. The hardware device can be any kind of device which can be programmed including, for example, any kind of a computer like a server or a personal computer, or the like, or any combination thereof, for example, one processor and two field-programmable gate arrays (FPGAs). The device may also include which could be for ex. hardware like an application-specific integrated circuit (ASIC) or a combination of hardware and software, an ASIC and an FPGA, or at least one microprocessor and at least one memory with software modules located therein. Thus, the device may include at least one hardware unit or at least one hardware-cum-software unit. The method various embodiments of the present disclosure described herein could be implemented in pure hardware or partly in hardware and partly in software. Alternatively, the embodiment of the present disclosure may be implemented on different hardware devices, for ex. using a plurality of central processing units (CPUs).

The foregoing description of the specific embodiments of the present disclosure will so fully reveal the general nature of the various embodiments of the present disclosure herein that others can, by applying current knowledge, readily modify and/or adapt for various applications such specific embodiments of the present disclosure without departing from the generic concept, and, therefore, such adaptations and modifications should and are intended to be comprehended within the meaning and range of equivalents of the disclosed various embodiments of the present disclosure. It is to be understood that the phraseology or terminology employed herein is for the purpose of description and not of limitation.

While the present disclosure has been shown and described with reference to various embodiments thereof, it will be understood by those skilled in the art that various changes in form and details may be made therein without departing from the scope of the present disclosure as defined by the appended claims.

## Claims

1. A method for handling calls carried out by at least one processor in a first User Equipment, UE, in a communication network, the method comprising:
establishing a first call with a second UE, wherein the first call is one of a circuit-switched, CS, call and a packet-switched, PS, call;
establishing a second call with a third UE, while the first call is in an active state, wherein the second call is one of a CS call and a PS call; and
merging the first call and the second call on the basis of a specific event,
wherein merging the first call and the second call, comprises:
receiving voice data of the first call from the second UE and voice data of the second call from the third UE;
generating first mixed voice data by mixing the voice data received from the third UE and voice data of the first UE;
transmitting, to the second UE, the first mixed voice data;
generating second mixed voice data by mixing the voice data received from the second UE and the voice data of the first UE; and
transmitting, to the third UE, the second mixed voice data,
the method **characterized by**:
if the first call is a CS call and the second call is a PS call, the voice data of the second call from the third UE is downsampled for generating the first mixed voice data, and the voice data received from the second UE is upsampled for generating the second mixed voice data.

2. The method as claimed in claim 1, wherein while the voice data of the first call is received, the second call is switched to a hold-on state.

3. The method as claimed in claim 1, wherein the first call is initiated by the first UE or the second UE.

4. The method as claimed in claim 1, wherein the second call is initiated by the first UE or the third UE.

5. The method as claimed in claim 1, wherein a stream provided to the second UE and a stream provided to the third UE are different from each other.

6. A first user equipment, UE (101), for handling calls in a communication network (100), the first UE comprising:
a transceiver configured to transmit/receive related messages; and
at least one processor coupled to the transceiver,
wherein the at least one processor is configured to:
establish a first call with a second UE (102.a), wherein the first call is one of a circuit-switched, CS, call and a packet-switched, PS, call,
establish a second call with a third UE (102.b), while said first call is in an active state, wherein the second call is one of a CS call and a PS call, and
merge the first call and the second call, and
wherein the at least one processor is further configured to control to:
receive voice data of the first call from the second UE (102.a) and voice data of the second call from the third UE (102.b),
generate first mixed voice data by mixing the voice data received from the third UE (102.b) and voice data of the first UE (101),
transmit, to the second UE (102.a), the first mixed voice data,
generate second mixed voice data by mixing the voice data received from the second UE (102.a) and the voice data of the first UE (101), and
transmit, to the third UE, the second mixed voice data,
the UE **characterized by**:
if the first call is a CS call and the second call is a PS call, the voice data of the second call from the third UE is down-sampled for generating the first mixed voice data, and the voice data received from the second UE is up-sampled for generating the second mixed voice data.

7. The first UE (101) as claimed in claim 6, wherein while the voice data of the first call is received, the second call is switched to a hold-on state.

8. The first UE (101) as claimed in claim 6, wherein the first call is initiated by the first UE (101) or the second UE (102.a).

9. The first UE (101) as claimed in claim 6, wherein the second call is initiated by the first UE (101) or the third UE (102.b).

10. The first UE (101) as claimed in claim 6, wherein a stream provided to the second UE (102.a) and a stream provided to the third UE (102.b) are different from each other.

11. A computer readable medium comprising instructions which, when executed by a processor, cause the processor to carry out the method of any one of claims 1 to 5.

## Patentansprüche

1. Verfahren zum Handhaben von Anrufen, durchgeführt von wenigstens einem Prozessor in einem ersten Benutzergerät (UE) in einem Kommunikationsnetzwerk, wobei das Verfahren Folgendes beinhaltet:
Einrichten eines ersten Anrufs mit einem zweiten UE, wobei der erste Anruf ein leitungsgeschalteter (CS) Anruf oder ein paketgeschalteter (PS) Anruf ist;
Einrichten eines zweiten Anrufs mit einem dritten UE, während der erste Anruf in einem aktiven Zustand ist, wobei der zweite Anruf ein CS-Anruf oder ein PS-Anruf ist; und
Zusammenführen des ersten Anrufs und des zweiten Anrufs auf der Basis eines spezifischen Ereignisses,
wobei das Zusammenführen des ersten Anrufs und des zweiten Anrufs Folgendes beinhaltet:
Empfangen von Sprachdaten des ersten Anrufs vom zweiten UE und von Sprachdaten des zweiten Anrufs vom dritten UE;
Erzeugen von ersten gemischten Sprachdaten durch Mischen der vom dritten UE empfangenen Sprachdaten und der Sprachdaten des ersten UE;
Übertragen der ersten gemischten Sprachdaten zum zweiten UE;
Erzeugen von zweiten gemischten Sprachdaten durch Mischen der vom zweiten UE empfangenen Sprachdaten und der Sprachdaten des ersten UE; und
Übertragen der zweiten gemischten Sprachdaten zum dritten UE,
wobei das Verfahren **dadurch gekennzeichnet ist, dass**:
wenn der erste Anruf ein CS-Anruf ist und der zweite Anruf ein PS-Anruf ist, die Sprachdaten des zweiten Anrufs vom dritten UE heruntergesampelt werden, um die ersten gemischten Sprachdaten zu erzeugen, und die vom zweiten UE empfangenen Sprachdaten hochgesampelt werden, um die zweiten gemischten Sprachdaten zu erzeugen.

2. Verfahren nach Anspruch 1, wobei während des Empfangs der Sprachdaten des ersten Anrufs der zweite Anruf in einen Haltezustand geschaltet wird.

3. Verfahren nach Anspruch 1, wobei der erste Anruf vom ersten UE oder vom zweiten UE eingeleitet wird.

4. Verfahren nach Anspruch 1, wobei der zweite Anruf vom ersten UE oder vom dritten UE eingeleitet wird.

5. Verfahren nach Anspruch 1, wobei sich ein dem zweiten UE bereitgestellter Strom und ein dem dritten UE bereitgestellter Strom voneinander unterscheiden.

6. Erstes Benutzergerät (UE) (101) zum Handhaben von Anrufen in einem Kommunikationsnetzwerk (100), wobei das erste UE Folgendes umfasst:
einen Transceiver, konfiguriert zum Senden/Empfangen von verwandten Nachrichten; und
wenigstens einen mit dem Transceiver gekoppelten Prozessor,
wobei der wenigstens eine Prozessor konfiguriert ist zum:
Einrichten eines ersten Anrufs mit einem zweiten UE (102.a), wobei der erste Anruf ein leitungsgeschalteter (CS) Anruf oder ein paketgeschalteter (PS) Anruf ist,
Einrichten eines zweiten Anrufs mit einem dritten UE (102.b), während der genannte erste Anruf in einem aktiven Zustand ist, wobei der zweite Anruf ein CS-Anruf oder ein PS-Anruf ist, und
Zusammenführen des ersten Anrufs und des zweiten Anrufs, und
wobei der wenigstens eine Prozessor ferner konfiguriert ist, um Folgendes zu steuern:
Empfangen von Sprachdaten des ersten Anrufs vom zweiten UE (102.a) und von Sprachdaten des zweiten Anrufs vom dritten UE (102.b),
Erzeugen von ersten gemischten Sprachdaten durch Mischen der vom dritten UE (102.b) empfangenen Sprachdaten und von Sprachdaten des ersten UE (101),
Übertragen der ersten gemischten Sprachdaten zum zweiten UE (102.a),
Erzeugen von zweiten gemischten Sprachdaten durch Mischen der vom zweiten UE (102.a) empfangenen Sprachdaten und der Sprachdaten des ersten UE (101), und
Übertragen der zweiten gemischten Sprachdaten zum dritten UE,
wobei das UE **dadurch gekennzeichnet ist, dass**:
wenn der erste Anruf ein CS-Anruf ist und der zweite Anruf ein PS-Anruf ist, die Sprachdaten des zweiten Anrufs vom dritten UE heruntergesampelt werden, um die ersten gemischten Sprachdaten zu erzeugen, und die vom zweiten UE empfangenen Sprachdaten hochgesampelt werden, um die zweiten gemischten Sprachdaten zu erzeugen.

7. Erstes UE (101) nach Anspruch 6, wobei während des Empfangens der Sprachdaten des ersten Anrufs der zweite Anruf in einen Haltezustand geschaltet wird.

8. Erstes UE (101) nach Anspruch 6, wobei der erste Anruf durch das erste UE (101) oder das zweite UE (102.a) eingeleitet wird.

9. Erstes UE (101) nach Anspruch 6, wobei der zweite Anruf vom ersten UE (101) oder vom dritten UE (102.b) eingeleitet wird.

10. Erstes UE (101) nach Anspruch 6, wobei sich ein dem zweiten UE (102.a) bereitgestellter Strom und ein dem dritten UE (102.b) bereitgestellter Strom voneinander unterscheiden.

11. Computerlesbares Medium, das Befehle umfasst, die bei Ausführung durch einen Prozessor bewirken, dass der Prozessor das Verfahren nach einem der Ansprüche 1 bis 5 durchführt.

## Revendications

1. Procédé pour la gestion d'appels réalisé par au moins un processeur dans un premier équipement utilisateur, UE, dans un réseau de communication, le procédé comprenant :
l'établissement d'un premier appel avec un deuxième UE, le premier appel étant un appel parmi un appel à commutation de circuits, CS, et un appel à commutation de paquets, PS ;
l'établissement d'un deuxième appel avec un troisième UE, pendant que le premier appel est dans un état actif, le deuxième appel étant un appel parmi un appel CS et un appel PS ; et
la fusion du premier appel et du deuxième appel sur la base d'un événement spécifique,
la fusion du premier appel et du deuxième appel comprenant :
la réception de données vocales du premier appel à partir du deuxième UE et de données vocales du deuxième appel à partir du troisième UE ;
la génération de premières données vocales mélangées grâce au mélange des données vocales reçues à partir du troisième UE et des données vocales du premier UE ;
la transmission, au deuxième UE, des premières données vocales mélangées ;
la génération de deuxièmes données vocales mélangées grâce au mélange des données vocales reçues à partir du deuxième UE et des données vocales du premier UE ; et
la transmission, au troisième UE, des deuxièmes données vocales mélangées,
le procédé étant **caractérisé par le fait que** :
si le premier appel est un appel CS et le deuxième appel est un appel PS, les données vocales du deuxième appel à partir du troisième UE sont sous-échantillonnées pour générer les premières données vocales mélangées, et les données vocales reçues à partir du deuxième UE sont sur-échantillonnées pour générer les deuxièmes données vocales mélangées.

2. Procédé tel que revendiqué dans la revendication 1, dans lequel pendant que les données vocales du premier appel sont reçues, le deuxième appel est commuté vers un état d'attente.

3. Procédé tel que revendiqué dans la revendication 1, dans lequel le premier appel est lancé par le premier UE ou le deuxième UE.

4. Procédé tel que revendiqué dans la revendication 1, dans lequel le deuxième appel est lancé par le premier UE ou le troisième UE.

5. Procédé tel que revendiqué dans la revendication 1, dans lequel un flux fourni au deuxième UE et un flux fourni au troisième UE sont différents l'un de l'autre.

6. Premier équipement utilisateur, UE (101), pour la gestion d'appels dans un réseau de communication (100), le premier UE comprenant :
un émetteur-récepteur configuré pour émettre/recevoir des messages apparentés ; et
au moins un processeur couplé à l'émetteur-récepteur,
l'au moins un processeur étant configuré pour :
établir un premier appel avec un deuxième UE (102.a), le premier appel étant un appel parmi un appel à commutation de circuits, CS, et un appel à commutation de paquets, PS,
établir un deuxième appel avec un troisième UE (102.b), pendant que ledit premier appel est dans un état actif, le deuxième appel étant un appel parmi un appel CS et un appel PS, et
effectuer la fusion du premier appel et du deuxième appel, et
l'au moins un processeur étant configuré en outre pour assurer la commande afin de :
recevoir des données vocales du premier appel à partir du deuxième UE (102.a) et des données vocales du deuxième appel à partir du troisième UE (102.b),
générer des premières données vocales mélangées grâce au mélange des données vocales reçues à partir du troisième UE (102.b) et des données vocales du premier UE (101),
transmettre, au deuxième UE (102.a), les premières données vocales mélangées,
générer des deuxièmes données vocales mélangées grâce au mélange des données vocales reçues à partir du deuxième UE (102.a) et des données vocales du premier UE (101), et
transmettre, au troisième UE, les deuxièmes données vocales mélangées,
l'UE étant **caractérisé par le fait que** : si le premier appel est un appel CS et le deuxième appel est un appel PS, les données vocales du deuxième appel à partir du troisième UE sont sous-échantillonnées pour générer les premières données vocales mélangées, et les données vocales reçues à partir du deuxième UE sont sur-échantillonnées pour générer les deuxièmes données vocales mélangées.

7. Premier UE (101) tel que revendiqué dans la revendication 6, dans lequel pendant que les données vocales du premier appel sont reçues, le deuxième appel est commuté vers un état d'attente.

8. Premier UE (101) tel que revendiqué dans la revendication 6, dans lequel le premier appel est lancé par le premier UE (101) ou le deuxième UE (102.a).

9. Premier UE (101) tel que revendiqué dans la revendication 6, dans lequel le deuxième appel est lancé par le premier UE (101) ou le troisième UE (102.b).

10. Premier UE (101) tel que revendiqué dans la revendication 6, dans lequel un flux fourni au deuxième UE (102.a) et un flux fourni au troisième UE (102.b) sont différents l'un de l'autre.

11. Support lisible par un ordinateur comprenant des instructions qui, lorsqu'elles sont exécutées par un processeur, obligent le processeur à réaliser le procédé de l'une quelconque des revendications 1 à 5.
